# FASCICULE DE BREVET EUROPEEN

(11) **EP 3 146 552 B1**
(45) Date de publication et mention de la délivrance du brevet: **14.03.2018**
(21) Numéro de dépôt: 15726031.6
(22) Date de dépôt: 18.05.2015
(51) Int. Cl.: H01H 37/76, H01H 35/24, B01D 7/00

(54) **PROCEDE DE FERMETURE DE CIRCUIT D'ALIMENTATION ELECTRIQUE D'APPAREIL ELECTRIQUE PLACE DANS UNE CHAMBRE A PRESSION VARIABLE CONTROLEE ET DISPOSITIF ASSOCIE**
VERFAHREN ZUM SCHLIESSEN EINER ELEKTRISCHEN VERSORGUNGSSCHALTUNG EINER ELEKTRISCHEN VORRICHTUNG IN EINER KAMMER MIT GESTEUERTEM, VARIABLEM DRUCK UND ZUGEHÖRIGE VORRICHTUNG
METHOD FOR CLOSING AN ELECTRICAL POWER SUPPLY CIRCUIT OF AN ELECTRIC APPARATUS LOCATED IN A CHAMBER AT A CONTROLLED, VARIABLE PRESSURE, AND RELATED DEVICE

(30) Priorité: 20.05.2014 FR 1454522
(43) Date de publication de la demande: 29.03.2017
(73) Titulaire: Commissariat à l'Énergie Atomique et aux Énergies Alternatives, 75015 Paris (FR)
(72) Inventeur: LINES, Jean-François, F-33470 Le Teich (FR); CHARGY, Jérémy, F-33770 Salles (FR)
(74) Mandataire: Brevalex
(86) Numéro de dépôt international: PCT/EP2015/060838
(87) Numéro de publication internationale: WO 2015/177065

(56) Documents cités:
- WO-A1-2014/048495
- DE-B3-102009 053 146
- FR-A- 1 336 235
- US-A1- 2007 068 782

## Description

### DOMAINE TECHNIQUE ET ART ANTERIEUR

L'invention concerne un procédé de fermeture de circuit d'alimentation électrique d'appareil électrique placé dans une chambre à pression variable contrôlée et le dispositif associé.

L'invention s'applique à la sécurisation d'équipements électriques destinés à fonctionner sous vide et dont on souhaite empêcher la mise en fonctionnement au-delà d'un niveau de pression donné.

De nombreux dispositifs existent dans le domaine de la sécurisation des appareils électriques devant fonctionner sous vide. Ces dispositifs sont réalisés soit à l'aide d'actionneurs mécaniques, couramment appelés pressostats, soit à l'aide de systèmes équipés d'instruments de mesure électroniques. Dans tous les cas, c'est la fermeture du circuit électrique auquel appartient l'appareil électrique qui autorise le fonctionnement de l'appareil à la suite d'une mesure de pression.

Dans le cas des actionneurs mécaniques, la fermeture du circuit électrique est généralement réalisée par le déplacement relatif de deux pièces mécaniques qui portent les broches de l'appareil électrique à faire fonctionner. Le déplacement des pièces mécaniques résulte de la différence de pression qui existe entre la pression mesurée dans la chambre dans laquelle se situe l'appareil électrique et la pression d'une chambre de référence étanche. La chambre de référence étanche est emplie d'un liquide ou d'un gaz. Sauf dispositions particulières, la chambre de référence est donc soumise à des variations thermiques, lesquelles variations induisent des variations de pression du liquide ou du gaz. Il y a donc un biais sur la pression de référence que délivre la chambre de référence.

Dans le cas des systèmes équipés d'instruments de mesure électroniques, plusieurs composants interviennent parmi lesquels une jauge de mesure de vide de système électronique qui analyse et traite la mesure de pression de la chambre dans laquelle se situe l'appareil électrique et un actionneur, ou relai, qui ferme le circuit électrique sur la base de l'information délivrée par la jauge. De tels systèmes comprennent de nombreux circuits et composants électroniques et ont, en conséquence, une fiabilité limitée.

L'invention ne présente pas les inconvénients mentionnés ci-dessus.

Le document US2007/0068782 divulgue un exemple de pressostat utilisable pour des appareils devant fonctionner sous vide.

Le document WO2014/048495 divulgue un commutateur électrique dans lequel il y a création d'un contact permanent entre deux contacts du commutateur électrique normalement ouvert par projection pyrotechnique d'un élément conducteur entre les deux contacts.

Le document FR1336235A divulgue un procédé pour l'obtention d'une couche mince et uniforme d'un dépôt métallique adhérent et absorbant sur un support mécaniquement résistant, par évaporation sous vide d'un métal et condensation des vapeurs sur une face du support.

### EXPOSE DE L'INVENTION

L'invention concerne un procédé de fermeture de circuit d'alimentation électrique d'appareil électrique placé dans une chambre à pression variable contrôlée, le circuit d'alimentation électrique comprenant un circuit-ouvert défini entre deux bornes électriquement conductrices. Le procédé de l'invention comprend :
- un chauffage, par exemple par effet Joule, qui fournit de l'énergie à un élément de matériau électriquement conducteur, par exemple un filament électriquement conducteur, placé dans l'enceinte ouverte à la pression de la chambre ;
- une sublimation de l'élément de matériau électriquement conducteur dès lors que ce dernier atteint une température donnée, si les conditions de pression dans la chambre correspondent aux conditions requises pour un fonctionnement sous-vide de l'appareil électrique ;
- une éjection de particules de vapeur du matériau électriquement conducteur qui résultent de la sublimation ; et
- une formation de dépôt de matériau électriquement conducteur entre les deux bornes électriquement conductrices comme suite à l'éjection des particules de vapeur.

Selon une caractéristique supplémentaire du procédé de l'invention, si les conditions de pression qui règnent dans la chambre ne correspondent pas aux conditions requises pour le fonctionnement sous-vide de l'appareil électrique, la sublimation du matériau conducteur ne se produit pas et aucun dépôt ne se forme entre les bornes electriquement conductrices.

L'invention concerne également un dispositif de fermeture de circuit d'alimentation électrique d'appareil électrique placé dans une chambre à pression variable contrôlée, le circuit d'alimentation électrique comprenant un circuit-ouvert défini entre deux bornes électriquement conductrices du circuit d'alimentation électrique. Le dispositif comprend :
- une enceinte ouverte à la pression de la chambre, les deux bornes électriquement conductrices étant formées sur une paroi intérieure de l'enceinte, la paroi étant faite d'un matériau électriquement isolant,
- un élément de matériau électriquement conducteur est placé dans l'enceinte, en regard du circuit ouvert, et
- un dispositif de chauffage de l'élément de matériau électriquement conducteur est apte à conduire à une sublimation du matériau électriquement conducteur dès lors que ce dernier atteint une température donnée, si les conditions de pression dans la chambre correspondent aux conditions requises pour un fonctionnement sous-vide de l'appareil électrique.

Selon une caractéristique supplémentaire du dispositif de l'invention, l'élément de matériau électriquement conducteur est fixé sur au moins une paroi intérieure de l'enceinte ouverte à la pression de la chambre et les deux bornes électriquement conductrices sont réalisées, sur une paroi intérieure de l'enceinte, par des pistes électriquement conductrices situées en vis-à-vis l'une de l'autre et en regard dudit élément de matériau électriquement conducteur.

Un avantage du procédé de l'invention est sa simplicité de mise en oeuvre. Cette simplicité apporte une garantie de sécurité importante. En effet, seules les conditions de pression requises pour un bon fonctionnement de l'appareil électrique permettent la sublimation de l'élément de matériau électriquement conducteur, laquelle sublimation conduit à la formation du court-circuit qui ferme le circuit d'alimentation de l'appareil électrique.

### BREVE DESCRIPTION DES FIGURES

D'autres caractéristiques et avantages de l'invention apparaîtront à la lecture de modes de réalisation préférentiels faits en référence aux figures jointes, parmi lesquelles :
La figure 1 représente le schéma de principe d'un dispositif de fermeture de circuit d'alimentation électrique d'appareil électrique selon un premier mode de réalisation de l'invention ;
Les figures 2A et 2B illustrent le fonctionnement du dispositif représenté en figure 1 ;
La figure 3 représente le schéma de principe d'un dispositif de fermeture de circuit d'alimentation électrique d'appareil électrique selon un deuxième mode de réalisation de l'invention ;
Les figures 4A et 4B illustrent le fonctionnement du dispositif représenté en figure 3 ;
La figure 5 représente, à titre d'exemple non limitatif, une vue en coupe d'un composant qui participe au dispositif de fermeture de circuit d'alimentation électrique d'appareil électrique de l'invention ;
La figure 6 représente la courbe de la pression P en fonction de la température θ d'un matériau électriquement conducteur utilisé pour réaliser l'élément de matériau électriquement conducteur qui participe au dispositif de fermeture de circuit d'alimentation électrique de l'invention.

Sur toutes les figures, les mêmes références désignent les mêmes éléments.

### EXPOSE DETAILLE DE MODES DE REALISATION DE L'INVENTION

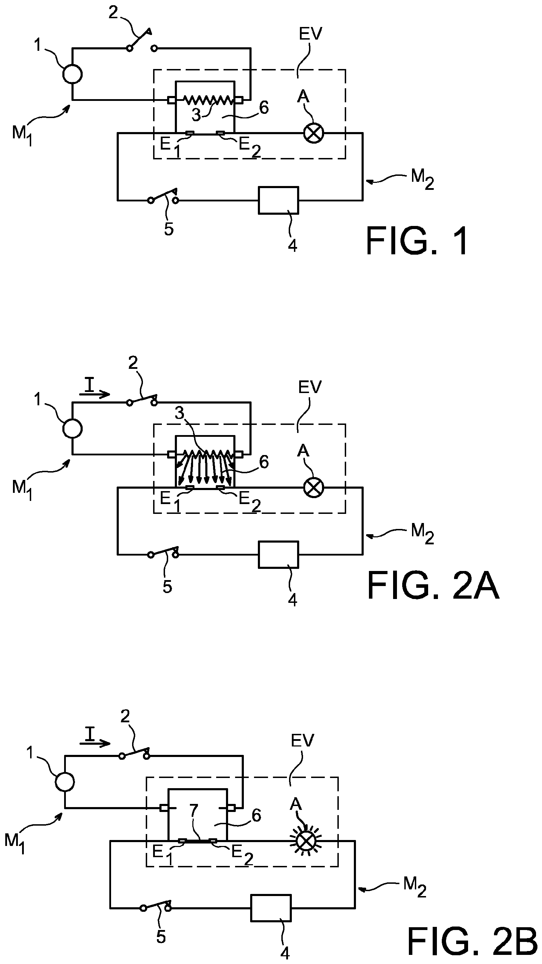

La figure 1 représente le schéma de principe d'un dispositif de fermeture de circuit d'alimentation électrique d'appareil électrique selon un premier mode de réalisation de l'invention.

Le dispositif comprend deux mailles électriques M₁, M₂. Une première maille M₁ comprend une source électrique 1 apte à réaliser un chauffage, par exemple par effet Joule, un interrupteur 2 et un élément de matériau électriquement conducteur 3, par exemple un filament de matériau électriquement conducteur. La deuxième maille M₂ comprend une alimentation électrique 4, un interrupteur 5, un circuit ouvert défini entre les extrémités E₁ et E₂ d'une interruption de la ligne électriquement conductrice qui participe à la deuxième maille et l'appareil électrique A destiné à fonctionner sous vide, par exemple une ampoule sous vide. Le circuit ouvert défini entre les extrémités E₁ et E₂ est placé en vis-à-vis de l'élément de matériau électriquement conducteur 3.

L'appareil électrique A est placé dans une chambre à pression variable contrôlée EV. La pression dans la chambre EV est prévue - a priori - pour permettre le bon fonctionnement de l'appareil électrique. Parmi les différents éléments décrits ci-dessus, outre l'appareil électrique A, la chambre EV contient au moins le circuit ouvert défini entre les extrémités E₁ et E₂ et l'élément de matériau électriquement conducteur 3. De façon préférentielle, le circuit ouvert défini entre les extrémités E₁ et E₂ et l'élément de matériau électriquement conducteur 3 sont placés à l'intérieur d'une enceinte 6 ouverte à la pression de la chambre EV et faite en matériau électriquement isolant.

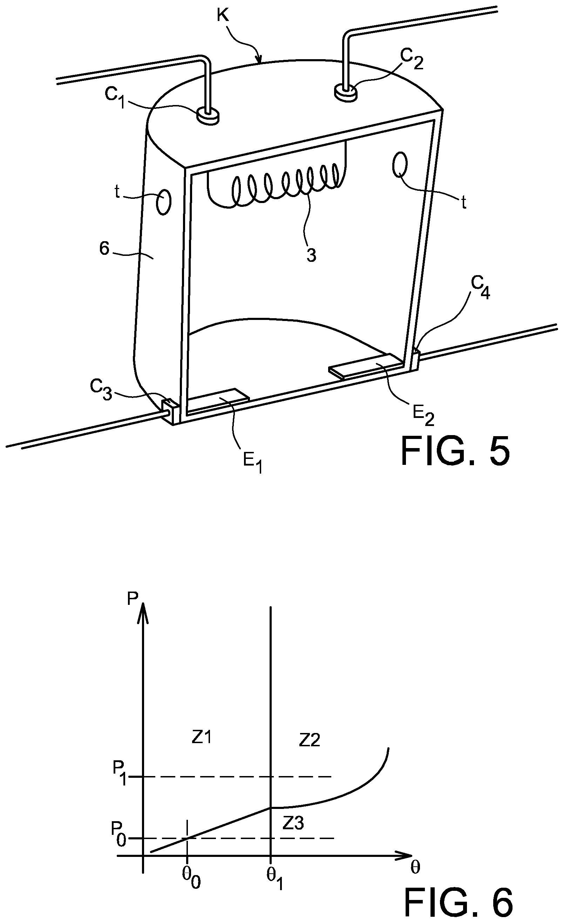

La figure 5 illustre, à titre d'exemple non limitatif, un composant K constitué de l'enceinte 6, du circuit ouvert et de l'élément de matériau électriquement conducteur 3. L'enceinte 6 est constituée, par exemple, d'une paroi cylindrique fermée, à chacune de ses deux extrémités, par une plaque. L'élément de matériau électriquement conducteur 3 et le circuit ouvert défini entre les extrémités E₁ et E₂ sont situés à l'intérieur de l'enceinte. L'élément de matériau électriquement conducteur 3 est fixé à l'une des deux plaques alors que le circuit ouvert est formé, en face dudit élément, sur la plaque opposée à la plaque où est fixé l'élément 3. Le circuit ouvert est formé par l'abscence de métallisation qui existe, sur la plaque, entre les extrémités E₁ et E₂ de pistes métalliques formées sur la plaque. Des connecteurs électriques C₁ et C₂ relient l'élément de matériau électriquement conducteur 3 au circuit électrique de la maille M₁ situé à l'extérieur de l'enceinte 6 et des connecteurs électriques C₃ et C₄ relient les extrémités respectives E₁ et E₂ des pistes métalliques au circuit électrique de la maille M₂ situé à l'extérieur de l'enceinte 6. Des trous débouchants « t » sont formés dans la paroi cylindrique de l'enceinte 6 afin d'établir une communication entre l'intérieur et l'extérieur de l'enceinte. La pression dans l'enceinte 6 est alors égale à la pression dans la chambre EV.

Le fonctionnement du dispositif de fermeture de circuit d'alimentation d'appareil électrique de l'invention est décrit ci-dessous, en référence aux figures 2A, 2B et 6.

La fermeture du circuit électrique de la maille M₁ s'effectue par la fermeture de l'interrupteur 2. Dès lors que l'interrupteur 2 est fermé, la source électrique 1 délivre une impulsion de courant qui circule dans la maille M₁ et chauffe le matériau de l'élément 3. Si les conditions de pression qui existent dans la chambre EV sont correctes, dès lors que la température du matériau atteint une valeur donnée, il y a sublimation du matériau qui passe alors de l'état solide à l'état gazeux (cf. Figure 2A).

La figure 6 représente le diagramme pression P / température θ d'un matériau électriquement conducteur utilisé pour réaliser l'élément 3. Trois zones Z1, Z2, Z3 apparaissent sur la figure 6 :
- une zone Z1 définit les valeurs de pression/température pour lesquelles le matériau est solide ;
- une zone Z2 définit les valeurs de pression/température pour lesquelles le matériau est liquide ;
- une zone Z3 définit les valeurs de pression/température pour lesquelles le matériau est gazeux.

Le matériau conducteur est alors choisi pour passer de l'état solide à l'état gazeux à la pression à laquelle l'appareil électrique A doit fonctionner.

A titre d'exemple non limitatif, pour une pression de 1Pₐ, le matériau choisi est le zinc et la température de sublimation correspondant à cette pression est de 344°C.

Lorsque la sublimation du matériau électriquement conducteur se produit, les particules de vapeur du matériau se condensent sur la paroi de l'enceinte et sur la plaque située face à l'élément 3. Avantageusement, les particules de vapeur du matériau conducteur se déplacent avec très peu de risque de collisions avec d'autres particules. Le gaz électriquement conducteur généré par le chauffage du matériau électriquement conducteur est projeté sur la paroi de l'enceinte et la plaque, sans être freiné par les phénomènes de diffusion et sans risque d'oxydation. Lorsque l'élément 3 a disparu, un dépôt de matériau électriquement conducteur 7 relie les deux extrémités conductrices E₁ et E₂ (court-circuit). Dès lors que l'interrupteur 5 est fermé, le circuit électrique de la maille M₂ se ferme et l'appareil électrique A fonctionne (cf. Figure 2B). La fermeture de l'interrupteur 5 est, selon la nécessité, simultanée ou postérieure à la fermeture de l'interrupteur 2.

Pour une gamme de pressions P₁ plus élevées que la pression P₀ (cf. figure 6), lorsque la température du matériau électriquement conducteur s'élève, soit le matériau demeure à l'état solide si la température reste inférieure à un certain seuil θ₁, soit le matériau passe à l'état liquide si la température dépasse ce seuil. Aucun court-circuit n'est alors apte à se former entre les extrémités conductrices E₁ et E₂. L'appareil électrique ne peut alors pas fonctionner.

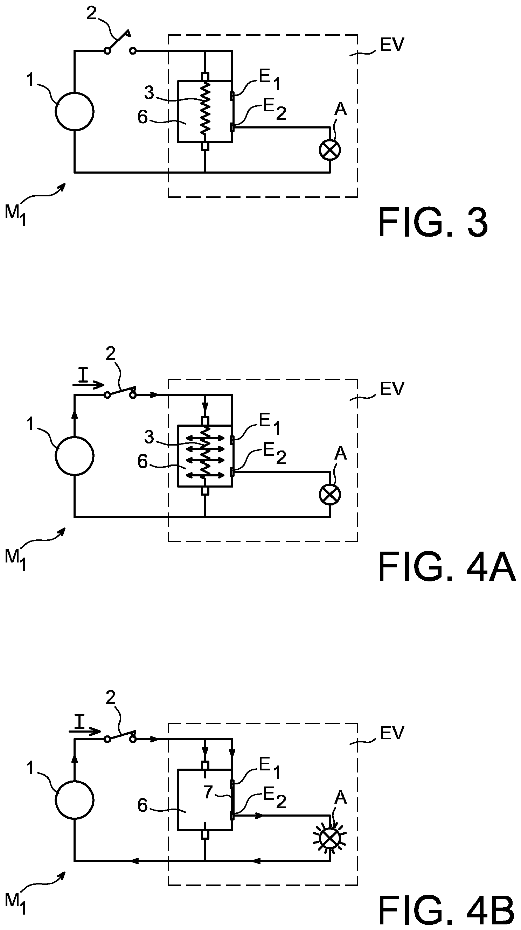

La figure 3 représente le schéma de principe d'un dispositif de fermeture de circuit d'alimentation électrique d'appareil électrique selon un deuxième mode de réalisation de l'invention.

Selon le deuxième mode de réalisation de l'invention, l'alimentation électrique 4 de l'appareil électrique A est réalisée avec la source électrique 1 qui permet de chauffer l'élément de matériau 3. Le dispositif comprend également une première maille M₁ telle que mentionnée précédemment pour le premier mode de réalisation de l'invention, à savoir une source électrique 1 en série avec un interrupteur 2 et un élément de matériau électriquement conducteur 3, par exemple un filament de matériau électriquement conducteur. De même que précédemment, un circuit ouvert défini par l'interruption d'une ligne conductrice fait face à l'élément 3, entre les extrémités E₁ et E₂ d'une interruption de ligne conductrice. L'appareil électrique A est monté en série avec le circuit ouvert et l'ensemble constitué par le circuit ouvert et l'appareil électrique A est monté en parallèle avec l'élément 3.

De façon préférentielle, l'élément 3 et le circuit ouvert sont rassemblés dans une enceinte ouverte 6 identique à celle définie pour le premier mode de réalisation de l'invention. De même que précédemment, l'appareil électrique A est placé dans une chambre à pression variable contrôlée EV et la pression dans la chambre EV est prévue -a priori- pour permettre le bon fonctionnement de l'appareil électrique. Parmi les différents éléments décrits ci-dessus, outre l'appareil électrique A, la chambre EV contient au moins le circuit ouvert défini entre les extrémités E₁ et E₂ et l'élément 3.

Les figures 4A et 4B illustrent le fonctionnement du dispositif représenté en figure 3. L'interrupteur 2 est tout d'abord ouvert. A la fermeture de l'interrupteur, une impulsion de courant circule dans la maille M₁. Si les conditions de pression dans la chambre EV et d'échauffement du matériau électriquement conducteur sont correctement établies, il y a sublimation du matériau électriquement conducteur (cf. Figure 4A) et formation d'un dépôt de matériau électriquement conducteur 7 entre les extrémités conductrices E₁ et E₂. Dès lors que le dépôt 7 est formé, l'élément 3 a disparu et la source électrique 1 entretient un courant dans l'appareil électrique A (cf. Figure 4B).

Avantageusement, le dispositif d'alimentation électrique de l'invention, quel que soit son mode de réalisation, est d'intégration facile et présente un encombrement réduit. L'absence de pièces mécaniques en mouvement assure une grande fiabilité du dispositif.

## Revendications

1. Procédé de fermeture de circuit d'alimentation électrique d'appareil électrique (A) placé dans une chambre à pression variable contrôlée (EV), le circuit d'alimentation électrique comprenant un circuit-ouvert défini entre deux bornes électriquement conductrices, **caractérisé en ce que**, les deux bornes électriquement conductrices étant formées sur une paroi intérieure faite d'un matériau électriquement isolant d'une enceinte ouverte à la pression de la chambre (6), le procédé comprend :
- un chauffage qui fournit de l'énergie à un élément de matériau électriquement conducteur (3) placé dans l'enceinte ouverte (6) à la pression de la chambre ;
- une sublimation de l'élément de matériau électriquement conducteur dès lors que celui-ci atteint une température donnée, si les conditions de pression dans la chambre correspondent aux conditions requises pour un fonctionnement sous-vide de l'appareil électrique ;
- une éjection de particules de vapeur du matériau électriquement conducteur qui résultent de la sublimation ; et
- une formation d'un dépôt de matériau électriquement conducteur (7) entre les deux bornes électriquement conductrices comme suite à l'éjection des particules de vapeur.

2. Procédé de fermeture de circuit d'alimentation électrique selon la revendication 1, dans lequel, si les conditions de pression qui règnent dans la chambre à pression variable controlée (EV) ne correspondent pas aux conditions requises pour un fonctionnement sous-vide de l'appareil électrique, la sublimation du matériau conducteur ne se produit pas et aucun dépôt ne se forme entre lesdites bornes.

3. Procédé selon l'une quelconque des revendications 1 ou 2, dans lequel l'élement de matériau électriquement conducteur (3) est un filament.

4. Procédé selon l'une quelconque des revendications précédentes, dans lequel le chauffage est un chauffage par effet Joule.

5. Dispositif de fermeture de circuit d'alimentation électrique d'appareil électrique (A) placé dans une chambre à pression variable contrôlée (EV), le circuit d'alimentation électrique comprenant un circuit-ouvert défini entre deux bornes électriquement conductrices (E₁, E₂) du circuit d'alimentation électrique, **caractérisé en ce qu'**il comprend :
- une enceinte ouverte à la pression de la chambre (6), les deux bornes électriquement conductrices étant formées sur paroi intérieure de l'enceinte, la paroi étant faite d'un matériau électriquement isolant,
- un élément de matériau électriquement conducteur (3) placé dans l'enceinte ouverte à la pression de la chambre (6), en regard du circuit ouvert, et
- un dispositif de chauffage (1, 2) de l'élément de matériau électriquement conducteur (3) apte à conduire à une sublimation du matériau électriquement conducteur dès lors que le matériau atteint une température donnée, si les conditions de pression dans la chambre à pression variable controlée correspondent aux conditions requises pour un fonctionnement sous-vide de l'appareil électrique.

6. Dispositif selon la revendication 5, dans lequel l'élément de matériau électriquement conducteur (3) est fixé sur au moins une paroi intérieure de l'enceinte (6) et les deux bornes électriquement conductrices (E₁, E₂) sont réalisées, sur une paroi intérieure de l'enceinte (6), par des pistes électriquement conductrices situées en vis-à-vis l'une de l'autre et en regard de l'élément de matériau électriquement conducteur (3).

7. Dispositif selon la revendication 5 ou 6, dans lequel le dispositif de chauffage (1, 2) comprend une source d'impulsions de courant (1) montée en série avec un interrupteur (2).

8. Dispositif selon l'une quelconque des revendications 5 ou 6, dans lequel le dispositif de chauffage (1, 2) est réalisé par l'alimentation électrique de l'appareil électrique.

9. Dispositif selon l'une quelconque des revendications 5 à 8, dans lequel l'élément de matériau électriquement conducteur (3) est un filament.

## Patentansprüche

1. Verfahren zum Schließen einer elektrischen Versorgungsschaltung eines elektrischen Geräts (A), das in einer Kammer mit variablem gesteuertem Druck (EV) platziert ist, wobei die elektrische Versorgungsschaltung einen offenen Stromkreis umfasst, der zwischen zwei elektrisch leitenden Anschlüssen definiert ist, **dadurch gekennzeichnet, dass** die zwei elektrisch leitenden Anschlüsse an einer aus einem elektrisch isolierenden Material hergestellten Innenwand eines Gehäuses gebildet sind, das für den Druck der Kammer (6) offen ist, wobei das Verfahren umfasst:
- ein Heizen, das Energie an ein Element aus elektrisch leitendem Material (3) liefert, das in dem für den Druck der Kammer offenen Gehäuse (6) platziert ist;
- eine Sublimation des Elements aus elektrisch leitendem Material, sobald dieses eine gegebene Temperatur erreicht, wenn die Druckbedingungen in der Kammer den Bedingungen entsprechen, die für eine Funktion des elektrischen Geräts im Vakuum erforderlich sind;
- einen Ausstoß von Dampfpartikeln des elektrisch leitenden Materials, die aus der Sublimation resultieren; und
- eine Bildung einer Abscheidung von elektrisch leitendem Material (7) zwischen den zwei elektrisch leitenden Anschlüssen als Folge des Ausstoßes der Dampfpartikel.

2. Verfahren zum Schließen einer elektrischen Versorgungsschaltung nach Anspruch 1, bei dem dann, wenn die Druckbedingungen, die in der Kammer mit variablem gesteuertem Druck (EV) herrschen, nicht den Bedingungen entsprechen, die für eine Funktion des elektrischen Geräts im Vakuum erforderlich sind, die Sublimation des leitenden Materials nicht erfolgt und sich keine Abscheidung zwischen den Anschlüssen bildet.

3. Verfahren nach einem der Ansprüche 1 oder 2, bei dem das Element aus elektrisch leitendem Material (3) ein Filament ist.

4. Verfahren nach einem der vorhergehenden Ansprüche, bei dem das Heizen ein Heizen mittels Joule-Effekt ist.

5. Vorrichtung zum Schließen einer elektrischen Versorgungsschaltung eines elektrischen Geräts (A), das in einer Kammer mit variablem gesteuertem Druck (EV) platziert ist, wobei die elektrische Versorgungsschaltung einen offenen Stromkreis umfasst, der zwischen zwei elektrisch leitenden Anschlüssen (E₁, E₂) der elektrischen Versorgungsschaltung definiert ist, **dadurch gekennzeichnet, dass** sie umfasst:
- ein für den Druck der Kammer (6) offenes Gehäuse, wobei die zwei elektrisch leitenden Anschlüsse an einer Innenwand des Gehäuses gebildet sind, wobei die Wand aus einem elektrisch isolierenden Material hergestellt ist,
- ein Element aus elektrisch leitendem Material (3), das in dem für den Druck der Kammer (6) offenen Gehäuse gegenüber dem offenen Stromkreis platziert ist, und
- eine Vorrichtung (1, 2) zum Heizen des Elements aus elektrisch leitendem Material (3), die dazu ausgelegt ist, eine Sublimation des elektrisch leitenden Materials zu bewirken, sobald das Material eine gegebene Temperatur erreicht, wenn die Druckbedingungen in der Kammer mit variablem gesteuertem Druck den Bedingungen entsprechen, die für eine Funktion des elektrischen Geräts im Vakuum erforderlich sind.

6. Vorrichtung nach Anspruch 5, bei dem das Element aus elektrisch leitendem Material (3) an wenigstens einer Innenwand des Gehäuses (6) befestigt ist, und die zwei elektrisch leitenden Anschlüsse (E₁, E₂) an einer Innenwand des Gehäuses (6) durch elektrisch leitende Bahnen realisiert sind, die einander gegenüberliegend und gegenüber dem Element aus elektrisch leitendem Material (3) angeordnet sind.

7. Vorrichtung nach Anspruch 5 oder 6, bei dem die Heizvorrichtung (1, 2) eine Strompulsquelle (1) umfasst, die in Reihe mit einem Unterbrecher (2) montiert ist.

8. Vorrichtung nach einem der Ansprüche 5 oder 6, bei dem die Heizvorrichtung (1, 2) durch die elektrische Versorgung des elektrischen Geräts realisiert ist.

9. Vorrichtung nach einem der Ansprüche 5 bis 8, bei dem das Element aus elektrisch leitendem Material (3) ein Filament ist.

## Claims

1. A method for closing an electrical power supply circuit of an electric apparatus (A) located in a chamber (EV) at a controlled variable pressure, the electrical power supply circuit comprising an open circuit defined between two electrically conductive terminals, **characterized in that**, both electrically conductive terminals being formed on an internal wall made of an electrically insulating material of an enclosure which is open to the pressure of the chamber (6), the method comprises:
- a heating which provides energy to an element made of electrically conductive material (3) located in the enclosure (6) which is open to the chamber pressure,
- a sublimation of the element made of electrically conductive material once the latter reaches a given temperature, if the pressure conditions in the chamber correspond to the conditions required for an operation of the electric apparatus under vacuum,
- an ejection of vapour particles of the electrically conductive material which result from the sublimation, and
- a formation of a deposit of electrically conductive material (7) between the two electrically conductive terminals as a consequence of the ejection of the vapour particles.

2. The method for closing an electrical power supply circuit according to claim 1, wherein, if the pressure conditions prevailing in the chamber (EV) at a controlled variable pressure does not correspond to the conditions required for operating the electric apparatus under vacuum, the sublimation of the conductive material does not occur and no deposit is formed between said terminals.

3. The method according to any of claims 1 or 2, wherein the element made of electrically conductive material (3) is a filament.

4. The method according to any of the preceding claims, wherein the heating is a Joule effect heating.

5. A device for closing an electrical power supply circuit of an electric apparatus (A) located in a chamber (EV) at a controlled variable pressure, the electrical power supply circuit comprising an open circuit defined between two electrically conductive terminals (E₁, E₂) of the electrical power supply circuit, **characterized in that** it comprises:
- an enclosure (6) which is open to the chamber pressure, both electrically conductive terminals being formed on an internal wall of the enclosure, the wall being made of an electrically insulating material,
- an element made of electrically conductive material (3) is located in the enclosure (6) which is open to the chamber pressure, facing the open circuit, and
- a heating device (1, 2) for heating the element made of electrically conductive material (3) is able to lead to a sublimation of the electrically conductive material once the material reaches a given temperature, if the pressure conditions in the chamber at a controlled variable pressure correspond to the conditions required for operating the electric apparatus under vacuum.

6. The device according to claim 5, wherein the element of electrically conductive material (3) is attached on at least one internal wall of the enclosure (6) and both electrically conductive terminals (E₁, E₂) are made, on an internal wall of the enclosure (6), by electrically conductive tracks located opposite to each other and facing the element made of electrically conductive material (3).

7. The device according to claim 5 or 6, wherein the heating device (1, 2) comprises a current pulse source (1) connected in series with a switch (2).

8. The device according to any of claims 5 or 6, wherein the heating device (1, 2) is made by the electrical power supply of the electric apparatus.

9. The device according to any of claims 5 to 8, wherein the element made of electrically conductive material (3) is a filament.
